# EUROPEAN PATENT SPECIFICATION

(11) **EP 1 701 824 B1**
(45) Date of publication and mention of the grant of the patent: **13.07.2011**
(21) Application number: 04806401.8
(22) Date of filing: 20.12.2004
(51) Int. Cl.: B25J 9/16, G05B 19/418

(54) **CONTROL METHOD DEVICE AND SYSTEM FOR ROBOT APPLICATIONS**
STEUERVERFAHREN, -VORRICHTUNG UND -SYSTEM FÜR ROBOTERANWENDUNGEN
PROCEDE, DISPOSITIF ET SYSTEME DE COMMANDE POUR APPLICATIONS DE ROBOT

(30) Priority: 22.12.2003 SE 0303535
(43) Date of publication of application: 20.09.2006
(73) Proprietor: ABB AS, Billingstad (NO)
(72) Inventor: BRYNE, Gisle, 4340 Bryne (NO)
(74) Representative: Dahlstrand, Björn
(86) International application number: PCT/IB2004/004220
(87) International publication number: WO 2005/063454

(56) References cited:
- US-A- 3 654 616
- US-A- 5 204 942
- US-A1- 2003 050 734
- US-B1- 6 347 253

## Description

### TECHNICAL FIELD.

The invention relates to a control method, device and system for industrial robots or manipulators. In particular the invention concerns a robot installation or application containing at least two industrial robots, at least one of which comprising at least four axes for servo-controlled movements. An industrial robot in this context comprises a manipulator with electric motors and a control means containing power means for driving the motors and computer means which by instructions from a computer program is arranged for sensing and controlling the manipulator movements.

### BACKGROUND ART

Industrial robots are used to carry out a very wide range of industrial and/or commercial tasks quickly and accurately. In many applications, for example welding car bodies or painting automobiles, the robot must operate a tool such as an arc welding tip, paint sprayer or a gripper etc. to carry out preprogrammed tasks repeatedly with consistent accuracy and speed. Painting of car bodies on an industrial scale usually takes place in a painting booth, through which the car bodies are moved in succession on a conveyor in a line. Two or more robots may be coordinated to paint the same car body in a production section such as a paint booth. The robot installation described above has a high degree of freedom of movement, long reach, can access places inside hollow sections, box sections performs well in service. The robot installations are advantageous and more versatile when compared to the traditional automated devices, such as simple type of hard automation solutions as reciprocators or the like.

The U.S. patent number 5,204,942, upon which the preamble of claims 1 and 16 is based, presents a robot control system for sequentially controlling a set of industrial robots for coordinated cooperative operation in accordance with a single general control program. The robot control system comprises a single storage unit storing a single general control program comprising motion instructions for the set of industrial robots, a single reading/compiling unit for separately reading the motion instructions from the storage unit and extracting the motion instructions for each industrial robot, and a plurality of driving units respectively driving the corresponding industrial robots in accordance with the motion instructions. The single general control program facilitates sequentially coordinating motion instructions for controlling the set of industrial robots so that the industrial robots will not interfere each other during the cooperative operation, finding errors in the instructions, and modifying the general control program to cope with changes in the process controlled by the robot control system.

However, it is a complex and demanding task to arrange and program robots to carry out operations on in a common workspace in a coordinated fashion. Much engineering and programming effort and constant exchange of signals is required in order to avoid collisions between robots. Such collisions may cause damage which interrupts production and may be expensive to repair. Moreover, for each new work object that is to be processed, the lengthy engineering and programming work must be repeated. Also a problem that may occur with robot automation, for example in a conveyor line situation, is that when the conveyor stops and a stoppage occurs, each or every robot must be individually checked and or manually operated or "jogged" to a known or "home" position. This problem and collisions that may occur usually results in either scrapped product, or unacceptable quality; or lost production; or both.

### SUMMARY OF THE INVENTION

The invention solves one or more of the above problems.

According to one aspect of the invention, the object is achieved by the method defined in claim 1.

The method provides for a plurality of robots to wait at the end of the current task, and not to proceed with the subsequently programmed task until the value for the common reference value is acceptable. This results in that whether the one or more robots wait or pause temporarily, or whether the wait continues for sufficient time so that all robots wait, when one or more of the robots re-start, each of them do so in a predetermined way by proceeding to the next task they had been programmed to carry out.

Additionally, the method comprises steps to check a value for a common position reference for the robots before the start of the next task and provide a signal to the robots to stop and wait at the end of the present task if the value for the position reference is not within acceptable limits. This prevents delays or stoppages due to a work object being moved into position later than expected. Similarly, the robots are re-started and proceed to start the next task as soon as the position reference value is detected to be acceptable. This provides a means to pause the robots during execution of a movement program as well as a means to recover from stoppage of any duration.

According to another embodiment, the method comprises steps to check a value for a reference for any robot in the plurality of robots or installation before the start of the next task and provide a signal to a given robot to stop and wait at the end of the present task if any other robot currently displays a value for the position reference or other reference that is not within acceptable limits. The embodiment provides a means to pause a robot during execution of the movement program of the robot, as well as a means to recover from stoppage by any other robot of any duration.

According to another aspect of the invention, the object is achieved by the control device defined in claim 16.

According to a preferred embodiment the control system also comprises a graphical user interface to display and carry out actions in respect of at least one robot controller or cell controller controlling at least one of the robots by means of the described movement program wherein the movements are executed as predefined tasks carried out in a predefined order.

A major advantage of the present invention is that robots may be programmed for cooperative or coordinated automation operations more quickly and more simply. The inventive strategy for the robot to wait at the end of a completed task if criteria to begin the next task are not acceptable has important consequence for programming a series of coordinated tasks. If a stoppage occurs ahead of a task that a robot is carrying out, the robot completes the present task but does not proceed to the next task. In this way, the programmer knows in what position the robot will be if it waits before proceeding. The number of possibilities the programmer must anticipate for each movement in a task is thereby greatly reduced. The job of programming is thereby greatly simplified, and may be carried out in a shorter time. After a movement program has been produced, the time to teach it to the robots it also reduced, because recovery after a stoppage does not require the type of anticipation, precautions, position re-checking and so that the methods of the prior art require.

Another important advantage of the invention is that a production line or conveyor may be re-started quickly following a stoppage with a minimum or no loss of quality. This represents a great saving in production time otherwise lost due to random or unplanned stoppages in automated production sections. At the time of a stoppage, each robot in the affected section or production cell or production line stops at the completion of one task and is waiting before proceeding to a subsequent task. When the line or section is re-started, each robot literally picks up where it left off, and proceeds to start the next task. Robots do not need to be manually jogged or automatically re-positioned before the line can be re-started, and work objects do not need to be moved, scrapped or replaced.

Another advantage of the present invention is a great saving in time and expense due to damage arising from collisions between a robot and a work object or between two robots. Another, further advantage is that the simplified strategy for a movement program, wherein all the movements in the program are divided up into tasks and the controller checks that there is no flag set high before proceeding to a subsequent task results in a much quicker set up time and reduced commissioning time when installing or re-configuring a line or section. As much of the invention is implemented in software the necessary time and capital cost of including the invention in both new installations and existing installations is relatively low and therefore very advantageous.

### BRIEF DESCRIPTION OF THE DRAWINGS

Embodiments of the invention will now be described, by way of example only, with particular reference to the accompanying drawings in which:
FIGURE 1 is a schematic diagram of method for teaching a robot one or more tasks according to a method of the Prior Art;
FIGURE 2 is a schematic diagram of method for teaching one or more robots in a production line with several robots one or more tasks by means of a method according to an embodiment of the invention;
FIGURE 3 is a schematic diagram showing a work object, a plurality of robots and a robot controller according to an embodiment of the invention;
FIGURE 4a is a flowchart for a method for teaching a movement program according to an embodiment of the invention to a robot, and Figure 4b is an alternative flowchart showing an option for both a verification stage and an operational flow;
FIGURE 5 is a flowchart for a method for measuring a common reference, work object movement for example, before the beginning of a new stroke;
FIGURE 6 is a flowchart for a method for checking the object position/status continually;
FIGURE 7 is a flowchart for a method for checking the object position/status of each other robot continually;
FIGURE 8 is a schematic block diagram of a robot controller with members, parts and software for monitoring for the reference thing position or time to control robot operation;
FIGURE 9 is a schematic block diagram of a control system for four robots operating on a work object in a common.space, a production cell of a production line.

### DETAILED DESCRIPTION OF THE EMBODIMENTS

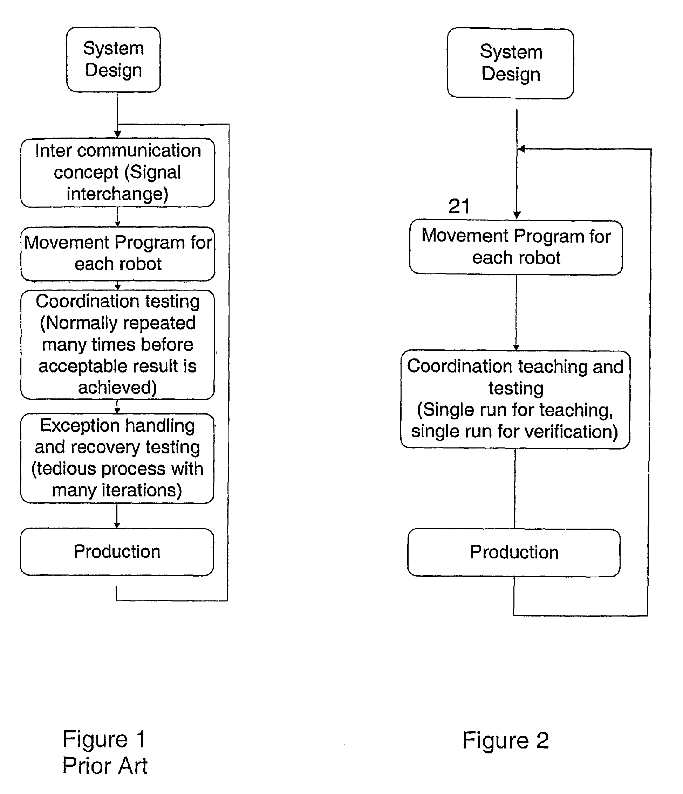

Figure 1 (Prior Art) shows a method for teaching tasks to one or more robots according to a known method. In order to set up a new or changed job, a series of 4 phases or steps are repeated until satisfactory production results are achieved, these being:
- design a communication concept between robots and controller,
- develop a movement program for each robot and teach it to each robot,
- coordination testing, movement adjustments, repeated testing till satisfactory,
- exception handling routines, testing recovery routines, repeated till satisfactory,
- begin.production.

Figure 2 summarises a method for teaching tasks to one or more robots according to an embodiment of the invention for controlling the one or more robots. It is immediately apparent how much quicker pre-production changes and set-up are made by use of the method. The diagram shows that use of the new method means that the pre-production set up phase is limited fewer phases (2) and finite repetition of only one of them. This is to be compared to the prior art method which requires a large number of iterations for each of two of the four phases, each heavily dependent on task complexity and the skill of the set-up user operator. The set-up phases according to the embodiment now consist only of:
- develop a movement program 21 for each robot and teach it to each robot,
- coordination testing, movement adjustments, one run for teaching and one run for verification,
- begin production.

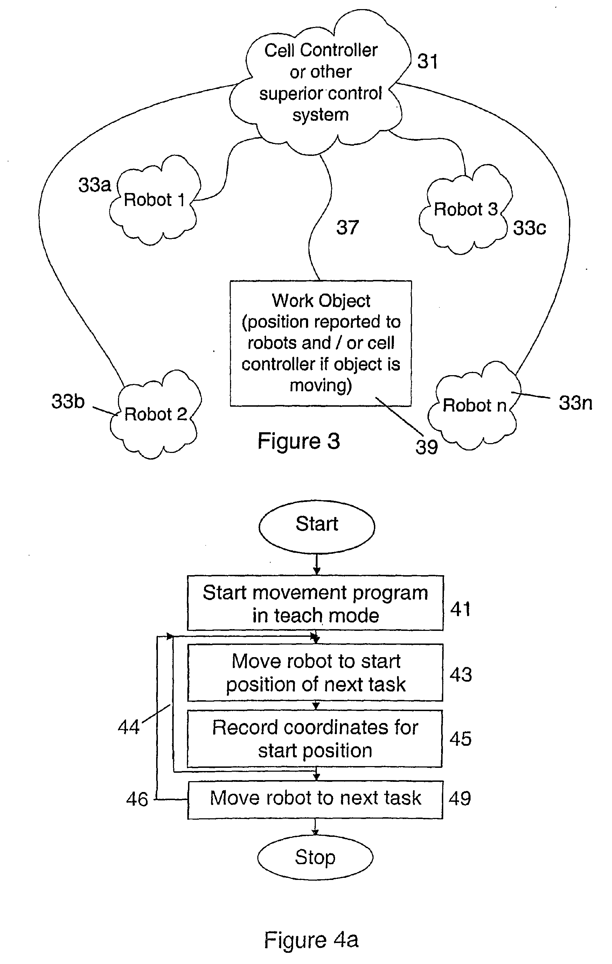

Figure 4a shows a flowchart for a method for teaching a movement program according to an embodiment of the invention to a robot of the plurality of robots working in a common workspace. It shows that a program controlling the robot is set to teach mode 41 for the present movement program. It shows a step 43 where the robot is moved to a desired start position 43 for a movement, and that start position, coordinates for the start position, recorded and saved, which is preferably saved automatically with position and or time coordinates. The robot is then allowed to move to the start of the first movement of the next task 49. This means that data is stored in the system so that when the conveyor has eg moved 1001 mm and or the clock has registered eg 100.01 seconds the work object should be in in position (within a window) to start task n. These positions and/or times may preferably be automatically recorded during a single verification run following writing the movement program. In the verification run-through, if a robot moves too close to another robot or to the work object etc, the technician presses a pause button on a control unit, or teach pendant etc., until the approaching object has moved away, then releases the pause button so that the given robot can begin the next task. This process is repeated over and over again while the start position (and or time) for the first movement, or part movement, of each task in the movement program is being recorded and saved.

These start positions, the coordinates of the positions, may later be edited after a manual comparison, or an on-screen comparison of the positions and coordinates to adjust or fine-tune the start points. Instructions may also be included in the tasks of the movement program to wait for a given recorded or input time period before moving to the next movement in the task, or to the next task. For example, a helper robot that opens a vehicle door for another robot to reach inside and paint the interior, may be held up by a suitable recorded or input time delay until the painting robot shall have finished painting and withdrawn.

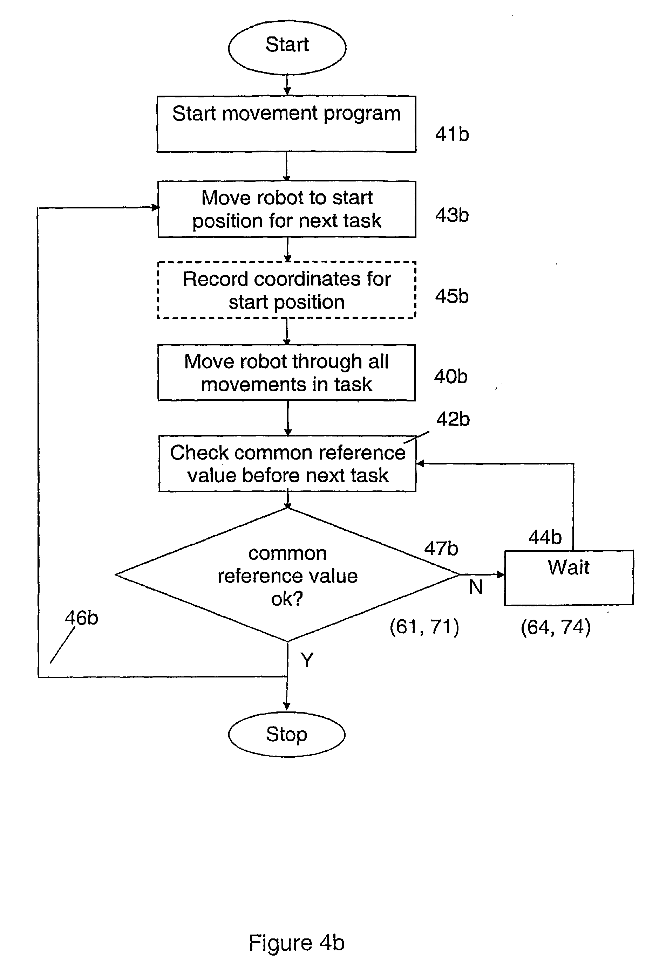

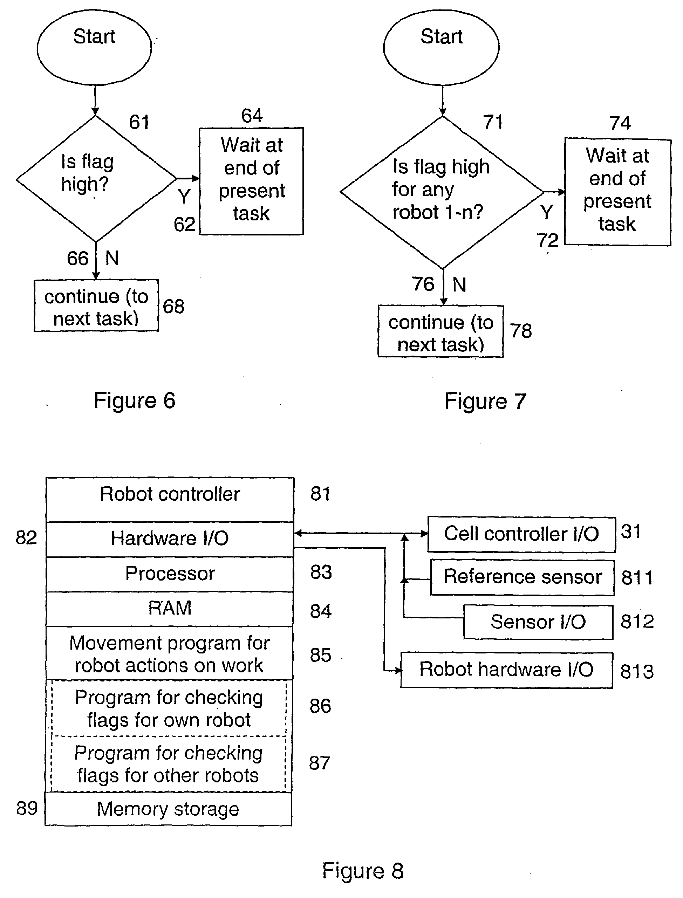

Figure 4b shows steps of a method for controlling a robot with a tool according to the preferred embodiment of the invention. The program starts at step 41b and the robot moves to the first task (which may be the next task) 43b. When the robot is in a teaching (programming) mode or a verify (program) mode, step 45b is included to capture, preferably automatically, a common reference value used by all the robots such as a time or coordinate position at which the next task starts. When operating in normal production mode, step 45b is by-passed. The robot moves through all the movements 40b of the present task. Before starting the next task, the robot checks 42b, a common reference value to see if the common reference value in use, a time at which a work object is in place or a position of the work object in order to start (similar to 61, 71 figs 6, 7), if that value is acceptable 44b. If the common reference value is within limits a Yes results in the robot starting 49b the next task. If the common reference value is not acceptable, N, 47b, the robot waits 44b (similar to 64 or 74 figs 6, 7) until such time as the common reference value is found to be within limits. In this way a temporary stoppage in a production line or cell does not result in a robot stopping in an uncoordinated way, so that each robot must be manually jogged to some next position or home position before a re-start may be carried out. Instead, each robot simply resumes operations at the start of the next task following the end of the task at which they stopped.

When repeating the program the robots will execute the movement as first programmed, but if the actual reference value measured or sensed is lower than expected, the robot will wait until it is larger or equal to the stored reference before continuing. If the actual reference value is higher than the stored reference value, a given robot may, depending on the conditions predetermined by the movement program, send a signal to the external reference controller/time keeper that it is late and the conveyor will halt or the time reference will stop until the given robot has caught up again

Figure 3 is a schematic diagram for a plurality of robots with a central controller or a a controller such as a cell control that has a superior and supervisory function. Each robot may have a controller of its own in the usual way, subordinated to some extent, to a more "central" controller such as a cell controller. Figure 3 shows a plurality of robots 33a-n such as Robot 3, Robot 1, Robot 2 and Robot n. One such cell controller 31 is shown with a control communication channel such as 35 to each robot such as Robot n. A work object 39 is shown, and the position of the work object is reported to the robots, and/or to a cell controller if the work object is a moving object. A communication channel 37 is shown for information relative to the work object.

The Movement Program developed according to the invention usually includes a number of movements. One or more movements are then normally handled as one or more tasks. In a painting program, for example, each separate paint stroke (movement) may be treated as a separate task. With spot welding, movement to and performance of each spot weld may be a task, whereas when a robot application is packing items in a box or container, each item may be a task or each row of items packed or each layer of items packed may be selected as one task if that is an appropriate way to divide up the movements in the program. In certain cases, for example, when making a continuous movement such as for a robot controlled laser or high power water jet to cut through a steel plate or similar, a single movement that carries on for a relatively long time or distance may be divided up into more than one task.

Having defined and taught or programmed a Movement Program for a robot as including a number of movements comprising tasks, the next principle behind the invention is that in the event that a stoppage occurs, the robot completes the present task but may not begin the subsequent task. The robot simply waits until an instruction is received to continue before proceeding with the next task.

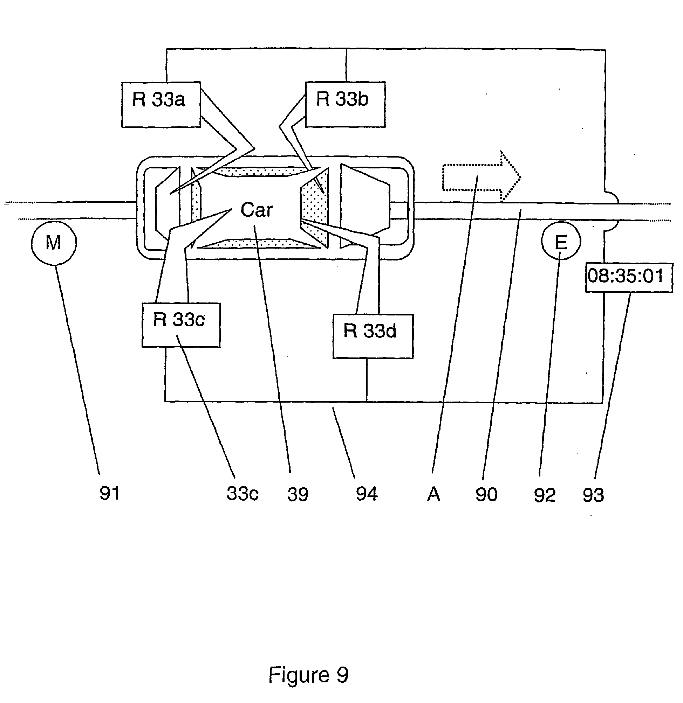

Figure 9 shows a schematic block diagram of, in this exemplary example, four robots working on a car body in a production cell, with a control system for the robots indicated symbolically. The figure shows a transport means 90 and a section of a production line. The transport means 90 moves in the direction of the arrow A. A work object 39, in this case a car body, is transported by the transport means 90 into a working area of, in this case, four robots, 33a-d. The robots are controlled by a control system, and each is connected by a suitable data network 94 which may be wired, wireless, or a mixture of both. The transport means is powered by an actuator, or motor 91, and movement of the transport means is recorded by an encoder 92; a pulse encoder or other device for registering the movement of a conveyor belt, rail, pallet or other transport means. A clock 93 may also be arranged to measure time elapsed, typically for the period(s) during which the conveyor or other transport means is moving.

Thus the common reference value, a reference value that all the robots may use as a common reference value to coordinate with each other may conveniently be provided by a sensor member such as a pulse encoder 92 that registers movement of the work object indirectly via movements of the conveyor. Such movement registration may be accomplished using any known sensor technique applied to a transport member arranged to move work objects to and from the common workspace by a conveyor or similar, or even by other transport forms such as in-floor track, overhead transport, trolleys, self-guided trolleys and the like.

Alternatively, a local time or time stamp may be provided to each robot controller and each cell controller. If the time stamp shows that the clock 93 has stopped, so as to say, then the local time reference value has obtained a status of not acceptable, or line stopped. When the time or time stamps become available again, then the local time reference value is acceptable. However, a simple movement tracker such as the pulse encoder described above is commonly present in most existing moving line installations and is thus convenient to use as the basis for a common reference value.

In more detail, a method of the invention includes that, as well as the known or normal status and control signals between
the robots, and between the robots and the cell controller, the following signals are interchanged according to an embodiment of the invention:
- distribution of a common reference value; preferably a position or movement indication relative the work object; or a coordinated time signal;
- signals or functions for notifying a superior controller, eg cell controller 31, about the present local execution position or execution point so that the object and/or other robots can be halted. The result of this inventive method is that each or any robot may only stop at the completion of a task. To re-start the cell or line after a normal interruption or production stoppage, it is then only necessary to reset or withdraw the wait signal and each robot then re-starts from a known position in their Movement Program. The robots simply proceed with the task that was to follow the last task that the robot completed. Thus a line re-start may be carried out automatically and without undue manual and specialist work and time to re-coordinate robots relative to each other or the work object, so that all properly functioning robots simply resume work according to the program instructions in their individual Movement Program 31.

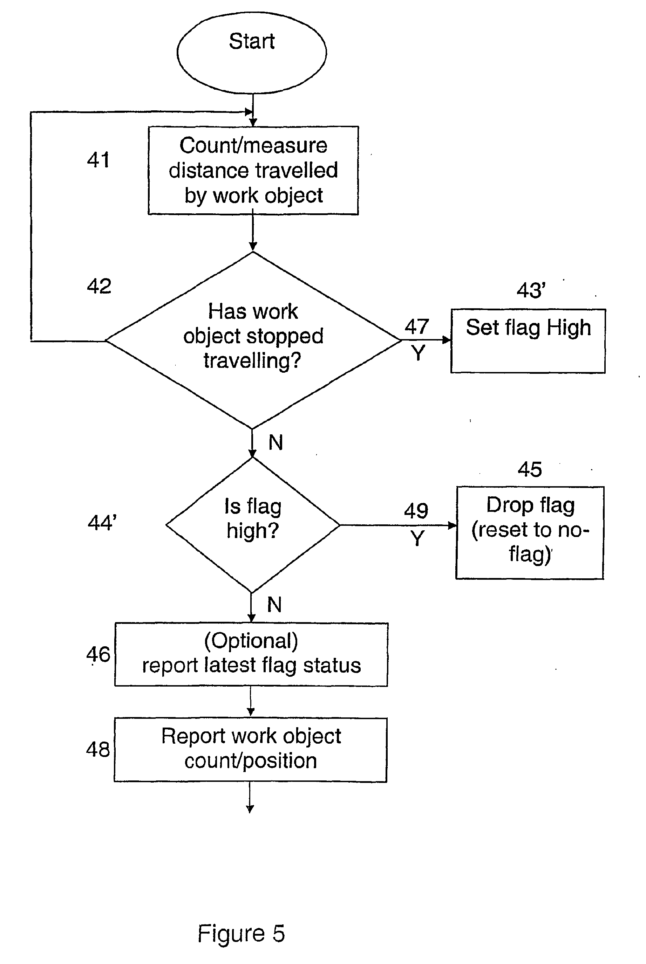

Figure 5 shows a flowchart for a method of controlling one of a plurality of robots according to a preferred embodiment of the invention. It shows an operation to count or measure 41 a distance travelled by a work object, and a comparison decision 42 to determine if the work object has stopped travelling. Thus in this embodiment, the common reference value is based on the relative movement, travel, of the work object. If the work object stops moving, then the status of the reference value is changed in the control program. In other words, if Yes, 47, a software flag or program code flag is set to high. The result of this is that when the robot concerned comes to the end of the present task, it is then instructed to wait (stop). A very short interruption of the line may result then in that perhaps only one robot stops and waits for a short time, and subsequently restarts as soon as the flag is removed, while other robots perhaps continue their tasks with being stopped or otherwise affected by a relatively short stoppage of another robot.

If the result of reference value comparison 42 is No, then the flag is not set high. In addition to a No at 42, another operation may follow that, which is to check if there is an existing flag is set high. If Yes, 49, then that flag is lowered 45 or in a similar or an equivalent way, removed, because the object is travelling. If No, 47, then the measure or counted result for position of the work object is reported 48 and/or stored. Optionally, a report of the present status (high or not high) for this flag may be stored and/or reported to the cell controller.

The coordination can be carried out by letting the superior controller such as cell controller 31 supervise so that all robots always are within a individually configurable tolerance window from the relative time and/or position recorded in coordination teaching mode.

The coordination function can also run completely independent from any superior controller. The comparisons may take place locally in a robot controller for each of one or more robots and then signals sent to the other robot(s), and/or a conveyor controller, to halt when a work object or robot comes outside its window limits. See for example descriptions below ref Figure 8 about sub routines or programs 86, 87, 85, 85a comprised to run in a robot controller 81.

Figure 6 shows a flowchart for continually checking the status of a reference value, a reference value such as that the work object is or is not moving according to predetermined values. It shows that a status check 61 is carried out to determine if a flag relative the reference value is high. If the flag is high, meaning that the work object has stopped travelling, the Yes, 62, results in that the robot will wait 64 at the end of the present task. If, in contrast the result of status check 61 is a No, 66, then this means that nothing happens, and the robot continues operating without any changes due to check 61. This status check is may be repeated almost continuously at a suitable, predetermined sampling frequency. The status check may also be performed at predetermined intervals such as just before the beginning of a subsequent task for the first robot, and/or just before the beginning of a subsequent task of another robot of the working group.

Figure 7 shows a similar flowchart to Figure 6. Figure 7 is a flowchart for a method to check if any of the other robots have stopped, that is, are waiting instead of proceeding to the next task. Figure 7 shows that a status check 71 is carried out to determine for any robot in the section or production cell has a flag relative the reference value that is set to high. If a flag for any robot in the section is high, meaning either that the work object has stopped travelling relative that section, or that the robot in question is presently waiting 64 for any reason, then the the Yes, 72, results in that the robot will wait 74 at the end of the present task. As before for Figure 6, if the result of status check 71 is a No, 76, then this means that nothing happens, and the robot continues operating without any changes due to check 71, which check is repeated at suitable intervals. Again, this may be repeated before a first robot starts the next task, before another robot starts a next task, and/or before any or all of the robots start a subsequent task.

Figure 8 shows a schematic block diagram of a local robot controller 81 with members, parts and software for monitoring for the reference value (common reference, position reference, robot waiting or common time reference etc) to control operation of a robot such as robots 1-n of Figure 3. It shows that the robot controller includes a hardware I/O interface 82, a processor or computer 83, a RAM memory 84, and preferably non-volatile or even long term memory storage 89. The robot controller also has one or more programs that run in the controller processor 83, including a movement program 85. Movement program 85 may comprise a program or routine 42 for checking a value for the common reference 41 to see if it is not acceptable, flag high 43. This program or routine may be comprise in the movement program 85, or in a separate program 85a similar to programs 86, 87 below.

Figure 8 also shows a program or routine for checking 86 if a flag for a robot controlled by the controller 81, eg a position reference value for the robot, is high. Another program or routine or sub-routine is also shown provided for checking 87 if whether any other robot in the cell has a flag set high.

The robot controller 81 issues instructions in the form of signals to the robot, robot hardware I/O 813 via the controller hardware I/O interface 82. Robot controller hardware I/O 82 also receives sensor input, such as sensor I/O 812 and also a reference sensor 811, which may be a pulse encoder on a conveyor, another position sensor for a work object, a local clock or time signal, or other reference value generator. Robot controller hardware I/O 82 also receives input from the cell controller 31 and may send output to the cell controller. The robot controller 81 may be a standard off-the-shelf component such as a programmable controller, but it has to be programmed with, or by another means made to run software code portions or computer programs according to the invention, and supplied as necessary with information in respect of the reference value or reference value status.

Sensor input to sensor.I/O 812 may be provided by one or more wireless sensors installed on or arranged in cooperation with a robot. Similarly, the robot hardware I/O 813 may comprise a wireless I/O to send and/or receive wireless signals.

The reference value status may also be generated from a cell-specific or robot-specific target position instead of from a more universal position indicator such as the line movement pulse encoder for the conveyor. When each Movement Program 21 is put through the coordination teaching run in step 22, as shown in Figure 2, before every stroke, a position of the target is recorded and may be saved in an array. Thus, for the beginning of every movement and therefore for every task, there is an associated target position. During normal operations the robot may check the target position stored in array before the start of the task (movement), and compare it to a measurement of what the present target position is now. A decision can be made if that target position is within a window around the predetermined, expected start position saved, for example in an array. If the measured position is outside the permissible window of the saved position, a reference value status of not acceptable, equivalent to high flag 43 of Figure 5, is established at that moment for that robot. Thus, if the measured position is outside the window, the reference status goes to not acceptable, flag high, and the robot is instructed to wait, equivalent o 64 of Figure 6. If the status is acceptable, no flag, then the next task is proceeded with. The reference value statuses established for each start position comparison in a production cell may be sample continuously by the cell controller 31. Some or all reference value statuses for each cell may be sampled by another control system controlling other sections of the line.

Thus to summarise, if a work object is out of position, a first robot waits before beginning the next task until the work object is within the position window. After the work object has moved into the position window as measured by current position measurement, the reference value becomes reset, and the first robot proceeds with the subsequent task. The movement program may later be fine tuned by teaching 22 one or more of the plurality of specific movements or tasks in the movement program 21 to improve speed or quality.

It is to be noted that the following paragraph is background information aiding the understanding of the invention but is not within the scope of protection of the claims

Thus it may be understood from the above that the inventive method also allows a robot to be intentionally paused, or temporarily halted, until another robot has completed a given task. This is a very advantageous feature. For example in a painting operation, a "helper" robot may be programmed to open a vehicle door at the right time and position so that a second robot may reach inside the vehicle to paint the body interior. The helper robot may be programmed so that it waits until the second robot has finished painting the interior, signalled in this example by that the second robot stops painting, retracts from the vehicle interior, and begins a wait state. When the helper robot obtains information that the second robot is waiting by means of that the reference value for that event shows a high flag for the second robot, it closes the vehicle door, retracts, and then begins a wait state of its own prior till the time when the next vehicle reaches the expected target position.

In another embodiment of the invention one or more robots are equipped with wireless communication between a robot control function and a component of the robot, or a sensor arranged to cooperate with a robot, or both. The use of wireless communication for selected monitoring and control functions is particularly advantageous, for example, for applications where automatic tool changes may be carried out by the robot, preferably so that no operator intervention is required in the production cell area.

In another, less preferred embodiment, a reference value may comprise a value for percentage of completion of a job. A measure of relative completion of a job may be used as a basis to provide a common reference value. This may be selected in situations where work objects are not transferred to and form the production cell by a conveyor or other moving line. In this case the reference value is generated by change or increment in a relative completion counter. Upon a change outside of a predetermined window in the value of the relative completion or percentage completion value being signaled, then at least one of the robots will set a flag high, as described above.

The methods of the invention may, as previously described, be carried out by means of one or more computer programs comprising computer program code or software portions running on a computer or a processor. The microprocessor (or processors) comprises a central processing unit CPU performing the steps of the method according to one or more facets of the invention. This is performed with the aid of one or more said computer programs, such as 85, 85a, 86, 87, which are stored at least in part in memory such as 84, 89 accessible by the one or more processors. The or each processor may be in a central object oriented control system in a local or distributed computerised control system. It is to be understood that said computer programs may also be run on one or more general purpose industrial microprocessors or computers instead of one or more specially adapted computers or processors.

The computer program comprises computer program code elements or software code portions that make the computer perform the method using equations, algorithms, data, stored values and calculations previously described. A part of the program may be stored in a processor as above, but also in a ROM, RAM, PROM, EPROM or EEPROM chip or similar memory means. The program in part or in whole may also be stored on, or in, other suitable computer readable medium such as a magnetic disk, CD-ROM or DVD disk, hard disk, magneto-optical memory storage means, in volatile memory, in flash memory, as firmware, stored on a data server or on one or more arrays of data servers. Other known and suitable media, including removable memory media such as Sony memory stick (TM) and other removable flash memories, hard drives etc. may also be used.

The computer programs described may also be arranged in part as a distributed application capable of running on several different computers or computer systems at more or less the same time. Programs as well as data such as start positions, or flag-related information may be made available for retrieval, delivery or, in the case of programs, execution over the Internet. Data may be accessed by means of any of: OPC, OPC servers, an Object Request Broker such as COM, DCOM or CORBA, a web service. Methods of the invention may also be practised, for example during a teaching or configuration phase, during operations, off-line or following a stoppage, by means of a Graphical User Interface (GUI), a graphical or textual display on an operator workstation, running on a user's logged-in computer, which may be connected direct to the robot control system or connected via a main or local control server or other control system computer.

Wireless communications may be carried out using any suitable protocol or standard. Short range radio communication is the preferred technology, using a protocol compatible with: a standard issued by the Bluetooth Special Interest Group (SIG), any variation of IEEE-802.11, WiFi, Ultra Wide Band (UWB), ZigBee or IEEE-802.15.4, IEEE-802.13 or equivalent, or similar. Wireless communication may also be carried out using Infra Red (IR) means and protocols such as IrDA, IrCOMM or similar; similarly sound or ultrasound transducers, through the air or via the robot construction, or may be used.

It is also noted that while the above describes exemplifying embodiments of the invention, there are several variations and modifications which may be made to the disclosed solution without departing from the scope of the present invention as defined in the appended claims.

## Claims

1. A method for controlling a plurality of robots (33a-n) carrying out an operation on one or more work objects (39) in a common workspace, wherein instructions for a plurality of movements are recorded in a program controlling each of said plurality of robots, said plurality of movements being determined as a plurality of tasks, **characterised by** controlling each of said plurality of robots dependent upon whether any other of said plurality of robots in the common workspace is proceeding as predetermined, according to a sensed or measured common reference value (43', 64, 74), wherein said controlling comprises:
- checking (42, 61, 71) a value for a common reference for said plurality of robots before the start of the next task, and
- providing a signal (47, 47b, 62, 72) to said plurality of robots to stop and wait (43, 64, 74) at the end of the present task if the common reference value is not within acceptable limits.

2. A method according to claim 1, **characterised by**
- checking (42, 61) a value for a position reference for said plurality of robots (33a-n) before the start of the next task,
- providing a signal to said plurality of robots (33a-n) to stop and wait (44b, 64) at the end of the present task if the position reference value is not within acceptable limits.

3. A method according to any of claims 1-2, **characterised by**
- checking (44b, 71) a reference value (64) or other operational status for said plurality of robots (33a-n), and
- providing a signal to stop and wait (74) at the end of the present task if at least one robot has a status of waiting or stopped.

4. A method according to claim 3, **characterised by** determining the value of the position reference for the plurality of robots (33a-n) by:
- sampling an output of a sensor member (92) arranged for measuring a position of a target located on one of said one or more work objects,
- comparing the measured position of the target to a predetermined target position,
- registering, if the measured target position is not within acceptable limits, the status of the position reference as not acceptable.

5. A method according to claim 4, **characterised in that** the target position on the work object is recorded for the beginning of each task in said plurality of movements recorded in said program and saved in an array or other memory storage.

6. A method according to claim 5, **characterised by** adjusting, by means of a program editing application, the target position of the work object after the first recording dependent on a manual comparison.

7. A method according to claim 6, **characterised by** adjusting, by means of a program editing application, the target position of the work object after the first recording dependent on a graphical comparison carried out using the program editing application.

8. A method according to claim 1, **characterised by** setting an indicator for a common reference in a program for any of said plurality of robots to a status of not acceptable or flag high (44b, 64, 74) which such common reference indicator status is detectable by other controllers or robot controllers.

9. A method according to claim 8, **characterised by** re-setting the indicator in the program and thus removing the not acceptable status.

10. A method according to claim 1, **characterised in that** the common reference is based on any of the list of: movement of a transport member of a work object, a time period, a time stamp, a measure of task completion, a measure of job completion.

11. A method according to claim 4, **characterised in that** the measured position of said target is a current position.

12. A method according to claim 4, **characterised in that** the measured position of said target is, in part, a calculated position.

13. A method according to claim 1, **characterised by** a robot controller determining that the common reference value measured or sensed (92, 93) is lower than the stored value, and making the plurality of robots (33a-n) wait until the reference value is larger than or equal to the stored reference before continuing.

14. A method according to claim 1, **characterised by** a robot controller determining that the common reference value measured or sensed (92, 93) is higher than the stored reference value, sending a signal to the external reference controller and/ or time keeper that a robot so controlled is late and the conveyor should be halted or the time reference stopped until the robot has caught up and attained an acceptable reference value.

15. A method according to any previous claim, **characterised in that** the acceptable values for the reference value comprise a pre-set window with configurable tolerance limits.

16. A control device (81) arranged capable to control of a plurality of robots (33a-n) operating on one or more work objects in a common workspace, wherein the operating comprises a plurality of movements being determined as a plurality of tasks, **characterised in that** said control device (81) comprises:
- a program member (85, 85a) for determining or detecting a value for a common reference (43) for said plurality of robots before the start of the next task,
- a program member (85) for controlling each of said plurality of robots dependent upon whether any other of said plurality of robots in the common workspace is proceeding as predetermined according to said value for a common reference (43),
- a logic member (85) for making, if the common reference value is not within acceptable limits, a decision that said plurality of robots shall stop and wait at the end of the present task,
- an output member (82) arranged capable to provide a signal to said plurality of robots comprising an instruction to wait.

17. A control device according to claim 16, **characterised by** comprising a program member (86) for determining or detecting a value for a position reference (64) for said plurality of robots (33a-n) before the start of the next task.

18. A control device according to claim 17, **characterised by** comprising a processor member (83).

19. A control device according to claim 17, **characterised by** comprising at least one memory storage member (84, 89).

20. A control device according to claim 16, **characterised by** comprising one or more software members (86, 87, 85, 85a) for carrying out the steps of a method according to any of claims 1-15.

21. A control device according to claim 20, **characterised in that** at least one of the one or more software members is arranged to check a time reference value for any of the plurality of robots (33a-n).

22. A control device according to claim 19, **characterised in that that** at least one of the one or more software members is stored at least in part in the memory storage member of a control device.

23. A control device according to claim 22, **characterised in that** at least one of the one or more software members (85a, 86, 87) is stored, at least in part, in a memory storage means of a cell controller (31) or other robot control system.

24. A control device according to any of claims 16-23, **characterised by** comprising an I/O interface for wireless communication with at least one sensor and/or member of at least one of said plurality of robots.

25. A control system comprising a control device according to claim 16.

26. A control system according to claim 25, **characterised in that** the system is arranged with sensor members (92) to measure a position (41) of the one or more work objects and/or transport members for said work objects and/or a clock of time sensor (93) to measure elapsed time relative the one or more work objects and/or transport members for said work objects.

27. A control system according to claim 26, **characterised in that** the sensor members are arranged to provide a measurement of the position of a work object that at least one of said plurality of robots shall operate on at the start of a task in a operating cycle or robot movement program (21).

28. A control system according to claim 27, **characterised by** a graphical user interface arranged to display and carry out actions in respect of at least one robot controller (81) or cell controller (31) controlling said plurality of robots by means of a movement program (21, 85, 85a) including tasks comprising one or more movements.

29. A control system according to claim 25, **characterised in that** a control member of the at least one robot controller is arranged to check a time reference value for at least one of said plurality of robots.

## Patentansprüche

1. Ein Verfahren zur Steuerung einer Mehrzahl von Robotern (33a-n), die eine Verrichtung an einem oder mehreren Arbeitsobjekten (39) in einem gemeinsamen Arbeitsraum ausführen, wobei Anweisungen für eine Mehrzahl von Bewegungen in einem Programm zur Kontrolle jedes einzelnen aus der Mehrzahl von Robotern aufgezeichnet sind, wobei diese Mehrzahl von Bewegungen als eine Vielzahl von Aufgaben bestimmt ist, **gekennzeichnet dadurch, dass** die Steuerung jedes einzelnen der Mehrzahl von Robotern abhängig davon ist, ob irgendein anderer aus der Mehrzahl der Roboter in dem gemeinsamen Arbeitsraum wie vorbestimmt vorgeht, gemäß einem gemessenen oder abgetasteten gemeinsamen Referenzwert (43', 64, 74), wobei das Steuern umfasst:
- Prüfen (42, 61, 71) eines Wertes für eine gemeinsame Referenz für die Mehrzahl von Robotern vor dem Beginn der nächsten Aufgabe, und
- Senden eines Signals (47, 47b, 62, 72) zum Stoppen und Warten (43, 64, 74) an die Mehrzahl von Robotern am Ende der aktuellen Aufgabe, wenn der gemeinsame Referenzwert nicht innerhalb akzeptabler Grenzen liegt.

2. Verfahren nach Anspruch 1, **gekennzeichnet durch**
- Prüfen (42, 61) eines Wertes für eine Positionsreferenz für die Mehrzahl von Robotern (33a-n) vor dem Beginn der nächsten Aufgabe,
- Senden eines Signals an die Mehrzahl von Robotern (33a-n) zum Stoppen und Warten (44b, 64) am Ende der aktuellen Aufgabe, wenn der Positions-Referenzwert nicht innerhalb akzeptabler Grenzen liegt.

3. Verfahren nach irgendeinem der Ansprüche 1 oder 2, **gekennzeichnet durch**
- Prüfen (44b, 71) eines Referenzwertes oder anderen Betriebsstatus der Mehrzahl von Robotern, und
- Senden eines Signals an die Mehrzahl von Robotern (33a-n) zum Stoppen und Warten (74) am Ende der aktuellen Aufgabe, wenn mindestens ein Roboter in einem Warte- oder Stop-Zustand ist.

4. Verfahren nach Anspruch 3, **gekennzeichnet durch** Bestimmen des Wertes der Positionsreferenz für die Mehrzahl von Robotern (33a-n) **durch**:
- Abtasten einer Ausgabe eines Sensorgliedes (92), das zum Messen einer Position eines Zieles ausgelegt ist, welches sich auf einem der einem oder mehreren Arbeitsobjekte befindet,
- Vergleichen der gemessenen Position des Zieles mit einer vorbestimmten Zielposition,
- Registrieren des Zustands der Positionsreferenz als inakzeptabel, falls die gemessene Zielposition nicht innerhalb akzeptabler Grenzen liegt.

5. Verfahren nach Anspruch 4, **gekennzeichnet dadurch, dass** die Zielposition auf dem Arbeitsobjekt für den Beginn jeder Aufgabe in der Mehrzahl der Bewegungen in dem Programm aufgezeichnet wird, und in einem Datenbereich oder anderen Speicher gespeichert wird.

6. Verfahren nach Anspruch 5, **gekennzeichnet durch** das Einstellen, mittels einer Programm-Bearbeitungs-Anwendung, der Zielposition des Arbeitsobjekts nach der ersten Aufzeichnung in Abhängigkeit von einem manuellen Vergleich.

7. Verfahren nach Anspruch 6, **gekennzeichnet durch** das Einstellen, mittels einer Programm-Bearbeitungs-Anwendung, der Zielposition des Arbeitsobjekts nach der ersten Aufzeichnung in Abhängigkeit von einem grafischen Vergleich, der mittels der Programm-Bearbeitungs-Anwendung ausgeführt wird.

8. Verfahren nach Anspruch 1, **gekennzeichnet durch** Setzen eines Indikators für einen gemeinsamen Referenzwert in einem Programm für irgendeinen der Mehrzahl von Robotern (33a-n) auf einen Inakzeptabel-Zustand oder ein Flag high (44b, 64, 74), wodurch jener Referenzindikator-Zustand **durch** andere Steuergeräte oder Roboter-Steuergeräte abfragbar ist.

9. Verfahren nach Anspruch 8, **gekennzeichnet durch** Rücksetzen des Indikators in dem Programm und **dadurch** Entfernen des Inakzeptabel-Zustands.

10. Verfahren nach Anspruch 1, **gekennzeichnet dadurch, dass** die gemeinsame Referenz auf irgendeinem aus der folgenden Liste basiert: Bewegung eines Transportgliedes eines Arbeitsobjekts, ein Zeitabschnitt, ein Zeitstempel, ein Messwert der Aufgabenerfüllung, ein Messwert der Arbeitsauftragserfüllung.

11. Verfahren nach Anspruch 4, **gekennzeichnet dadurch, dass** die gemessene Position des Zieles eine aktuelle Position ist.

12. Verfahren nach Anspruch 4, **gekennzeichnet dadurch, dass** die gemessene Position des Zieles eine teilweise berechnete Position ist.

13. Verfahren nach Anspruch 1, **gekennzeichnet dadurch, dass** ein Roboter-Steuergerät feststellt, dass der gemessene oder abgetastete (92, 93) gemeinsame Referenzwert kleiner als der gespeicherte Wert ist, und die Mehrzahl an Robotern (33a-n) zum Warten veranlasst, bis der Referenzwert größer oder gleich der gespeicherten Referenz ist, bevor fortgefahren wird.

14. Verfahren nach Anspruch 1, **gekennzeichnet dadurch, dass** ein Roboter-Steuergerät feststellt, dass der gemessene oder abgetastete (92, 93) gemeinsame Referenzwert größer als der gespeicherte Referenzwert ist, ein Signal an das externe Referenz-Steuergerät und/oder Zeitmesser gibt, dass ein derart kontrollierter Roboter verspätet ist und dass das Förderband angehalten werden oder die Zeitreferenz gestoppt werden sollte, bis der Roboter aufgeholt hat und einen akzeptablen Referenzwert erreicht hat.

15. Ein Verfahren gemäß irgendeinem der vorhergehenden Ansprüche, **gekennzeichnet dadurch, dass** die akzeptablen Werte für den Referenzwert ein Voreinstellungs-Fenster mit einstellbaren Toleranzgrenzen aufweisen.

16. Ein Steuergerät (81), eingerichtet zur Eignung für die Steuerung einer Mehrzahl von Robotern (33a-n), die an einem oder mehreren Arbeitsobjekten in einem gemeinsamen Arbeitsraum operieren, wobei das Operieren eine Mehrzahl von Bewegungen umfasst, die als eine Mehrzahl von Aufgaben bestimmt sind, **gekennzeichnet dadurch, dass** das Steuergerät (81) umfasst:
- ein Programm-Glied (85, 85a), zur Bestimmung oder Erkennung eines Wertes für eine gemeinsame Referenz (43) für die Mehrzahl von Robotern vor dem Beginn der nächsten Aufgabe,
- ein Programm-Glied (85) für die Steuerung jedes einzelnen aus der Mehrzahl von Robotern abhängig davon, ob irgendein anderer aus der Mehrzahl der Roboter in dem gemeinsamen Arbeitsraum wie vorbestimmt gemäß einem gemeinsamen Referenzwert (43) vorgeht,
- ein Logik-Glied (85) zum Treffen einer Entscheidung, dass, wenn der gemeinsame Referenzwert nicht innerhalb akzeptabler Grenzen ist, die Mehrzahl von Robotern am Ende der aktuellen Aufgabe anhalten und warten soll,
- ein Ausgabe-Glied (82) eingerichtet zur Eignung für die Ausgabe eines Signals an die Mehrzahl von Robotern, wobei das Signal eine Anweisung zum Warten umfasst.

17. Ein Steuergerät nach Anspruch 16, **gekennzeichnet dadurch, dass** es ein Programm-Glied (86) zum Bestimmen oder Erfassen eines Wertes für eine Positions-Referenz (64) für die Mehrzahl von Robotern (33a-n) vor dem Beginn der nächsten Aufgabe umfasst.

18. Ein Steuergerät nach Anspruch 17, **gekennzeichnet durch** das Umfassen eines Prozessor-Glieds (83).

19. Ein Steuergerät nach Anspruch 17, **gekennzeichnet durch** das Umfassen mindestens eines Speicher-Glieds (84, 89).

20. Ein Steuergerät nach Anspruch 16, **gekennzeichnet durch** das Umfassen eines oder mehrerer Software-Glieder (86, 87, 85, 85a) zur Ausführung eines Verfahrens gemäß irgendeinem der Ansprüche 1-15.

21. Ein Steuergerät nach Anspruch 20, **gekennzeichnet dadurch, dass** mindestens eines der ein oder mehreren Software-Glieder dazu ausgelegt ist, einen Zeitreferenzwert für irgendeinen aus der Mehrzahl von Robotern (33a-n) zu überprüfen.

22. Ein Steuergerät nach Anspruch 19, **gekennzeichnet dadurch, dass** mindestens eines der ein oder mehreren Software-Glieder zumindest zu einem Teil in einem Speicher-Glied eines Steuergeräts gespeichert ist.

23. Ein Steuergerät nach Anspruch 22, **gekennzeichnet dadurch, dass** mindestens eines der ein oder mehreren Software-Glieder (85a, 86, 87) zumindest zu einem Teil in einem Speichermittel eines Zellen-Steuergeräts (31) oder anderen Roboter-Kontrollsystems gespeichert ist.

24. Ein Steuergerät nach irgendeinem der Ansprüche 16-23, **gekennzeichnet durch** das Umfassen eines I/O-Interfaces für drahtlose Kommunikation mit mindestens einem Sensor und/oder Glied mindestens eines der Mehrzahl von Robotern.

25. Ein Steuersystem, umfassend ein Steuergerät nach Anspruch 16.

26. Ein Steuersystem nach Anspruch 25, **gekennzeichnet dadurch, dass** das System mit Sensorgliedern (92) eingerichtet ist, zur Messung einer Position (41) eines oder mehrerer der Arbeitsobjekte und/oder Transportglieder für die Arbeitsobjekte und/oder einen Uhrzeittakt-Sensor (93) zur Messung verstrichener Zeit relativ zu einem oder mehreren Arbeitsobjekten und/oder der Transport-Glieder für die Arbeitsobjekte.

27. Ein Steuersystem nach Anspruch 26, **gekennzeichnet dadurch, dass** die Sensor-Glieder dazu eingerichtet sind, eine Messung der Position eines Arbeitsobjekts zu liefern, an dem mindestens einer aus der Mehrzahl von Robotern am Beginn einer Aufgabe eines Arbeitszyklus oder eines Roboter-Bewegungs-Programms (21) operieren soll.

28. Ein Steuersystem nach Anspruch 27, **gekennzeichnet durch** eine grafische Benutzeroberfläche, eingerichtet zur Anzeige und der Ausführung von Aktionen in Bezug auf mindestens ein Roboter-Steuergerät (81) oder ein Zellen-Steuergerät (31), die die Mehrzahl von Robotern mittels eines Bewegungsprogramms (21, 85, 85a) steuern, einschließlich Aufgaben mit einer oder mehreren Bewegungen.

29. Ein Steuersystem nach Anspruch 25, **gekennzeichnet dadurch, dass** ein Steuerglied des mindestens einen Roboter-Steuergeräts dazu eingerichtet ist, einen Zeit-Referenzwert für mindestens einen aus der Mehrzahl von Robotern zu prüfen.

## Revendications

1. Procédé de commande d'une pluralité de robots (33a-n) exécutant une opération sur une ou plusieurs pièces (39) dans un espace de travail commun, dans lequel des instructions pour une pluralité de mouvements sont enregistrées dans un programme commandant chacun desdits robots, ladite pluralité de mouvements étant déterminée comme une pluralité de tâches, **caractérisé par** le fait de commander chacun desdits robots selon que l'un quelconque des autres robots présents dans l'espace de travail commun travaille ou non de la façon prévue, selon une valeur de référence commune détectée ou mesurée (43', 64, 74), dans lequel ladite commande comprend :
- le contrôle (42, 61, 71) d'une valeur pour une référence commune pour ladite pluralité de robots avant le démarrage de la tâche suivante, et
- la fourniture d'un signal (47, 47b, 62, 72) à ladite pluralité de robots pour qu'ils s'arrêtent et attendent (43, 64, 74) à la fin de la tâche courante si la valeur de référence commune ne se trouve pas dans des limites acceptables.

2. Procédé selon la revendication 1, **caractérisé par** :
- le contrôle (42, 61) d'une valeur pour une référence de position pour ladite pluralité de robots (33a-n) avant le démarrage de la tâche suivante,
- la fourniture d'un signal à ladite pluralité de robots (33a-n) pour qu'ils s'arrêtent et attendent (44b, 64) à la fin de la tâche courante si la valeur de référence de position ne se trouve pas dans des limites acceptables.

3. Procédé selon l'une quelconque des revendications 1 à 2, **caractérisé par** :
- le contrôle (44b, 71) d'une valeur de référence (64) ou d'un autre état fonctionnel pour ladite pluralité de robots (33a-n), et
- la fourniture d'un signal pour arrêter et attendre (74) à la fin de la tâche courante si au moins un robot a un état d'attente ou d'arrêt.

4. Procédé selon la revendication 3, **caractérisé en ce que** la détermination de la valeur de la référence de position pour la pluralité de robots (33a-n) est effectuée au moyen des étapes suivantes :
- échantillonner une sortie d'un élément de capteur (92) adapté pour mesurer une position d'une cible située sur l'une desdites une ou plusieurs pièces,
- comparer la position mesurée de la cible avec une position de cible prédéterminée,
- enregistrer, si la position de cible mesurée ne se trouve pas dans des limites acceptables, l'état de la référence de position comme non acceptable.

5. Procédé selon la revendication 4, **caractérisé en ce que** la position cible sur la pièce est enregistrée pour le début de chaque tâche dans ladite pluralité de mouvements enregistrés dans le programme et sauvegardée dans un disque ou autre stockage de mémoire.

6. Procédé selon la revendication 5, **caractérisé par** le fait d'ajuster, au moyen d'une application d'édition de programme, la position cible de la pièce après le premier enregistrement en fonction d'une comparaison manuelle.

7. Procédé selon la revendication 6, **caractérisé par** le fait d'ajuster, au moyen d'une application d'édition de programme, la position cible de la pièce après le premier enregistrement en fonction d'une comparaison graphique effectuée en utilisant l'application d'édition de programme.

8. Procédé selon la revendication 1, **caractérisé par** le fait de donner à un indicateur pour une référence commune dans un programme pour n'importe lequel desdits robots la valeur d'un état correspondant à non acceptable ou à un drapeau au niveau haut (44b, 64, 74), ledit état d'indicateur de référence commune étant détectable par d'autres contrôleurs ou contrôleurs de robot.

9. Procédé selon la revendication 8, **caractérisé par** le fait de remettre à zéro l'indicateur dans le programme, et donc de supprimer l'état non acceptable.

10. Procédé selon la revendication 1, **caractérisé en ce que** la référence commune est basée sur n'importe quel paramètre de la liste suivante : un mouvement d'un élément de transport d'une pièce, un intervalle de temps, un horodatage, une mesure d'achèvement de tâche, une mesure d'achèvement de travail.

11. Procédé selon la revendication 4, **caractérisé en ce que** la position mesurée de ladite cible est une position courante.

12. Procédé selon la revendication 4, **caractérisé en ce que** la position mesurée de ladite cible est, en partie, une position calculée.

13. Procédé selon la revendication 1, **caractérisé en ce que** un contrôleur de robot détermine que la valeur de référence commune mesurée ou détectée (92, 93) est inférieure à la valeur stockée, et fait attendre la pluralité de robots (33a-n) jusqu'à ce que la valeur de référence soit supérieure ou égale à la référence stockée avant de continuer.

14. Procédé selon la revendication 1, **caractérisé par** un contrôleur de robot qui détermine que la valeur de référence commune mesurée ou détectée (92, 93) est supérieure à la valeur de référence stockée, et qui envoie un signal au contrôleur de référence externe et/ou chronométreur signalant qu'un robot ainsi commandé a du retard et que le convoyeur doit être arrêté ou que la référence de temps doit être interrompue jusqu'à ce que le robot ait rattrapé et atteint une valeur de référence acceptable.

15. Procédé selon l'une quelconque des revendications précédentes, **caractérisé en ce que** les valeurs acceptables pour la valeur de référence comprennent une fenêtre préétablie avec des limites de tolérance configurables.

16. Dispositif de commande (81) adapté pour être capable de commander une pluralité de robots (33a-n) travaillant sur une ou plusieurs pièces dans un espace de travail commun, dans lequel le travail comprend une pluralité de mouvements déterminée comme une pluralité de tâches, **caractérisé en ce que** ledit dispositif de commande (81) comprend :
- un élément de programme (85, 85a) pour déterminer ou détecter une valeur pour une référence commune (43) pour ladite pluralité de robots avant le démarrage de la nouvelle tâche,
- un élément de programme (85) pour commander chacun desdits robots selon que l'un quelconque des autres robots présents dans l'espace de travail commun travaille ou non de la façon prévue, selon ladite valeur pour une référence commune (43),
- un élément logique (85) pour prendre la décision, si la valeur de référence commune ne se trouve pas dans des limites acceptables, que lesdits robots doivent s'arrêter et attendre à la fin de la tâche courante,
- un élément de sortie (82) adapté pour être capable de fournir un signal à ladite pluralité de robots comprenant une instruction ordonnant d'attendre.

17. Dispositif de commande selon la revendication 16, **caractérisé en ce qu'**il comprend un élément de programme (86) pour déterminer ou détecter une valeur pour une position de référence (64) pour ladite pluralité de robots (33a-n) avant le démarrage de la tâche suivante.

18. Dispositif de commande selon la revendication 17, **caractérisé en ce qu'**il comprend un élément de processeur (83).

19. Dispositif de commande selon la revendication 17, **caractérisé en ce qu'**il comprend au moins un élément de stockage en mémoire (84, 89).

20. Dispositif de commande selon la revendication 16, **caractérisé en ce qu'**il comprend un ou plusieurs éléments logiciels (86, 87, 85, 85a) pour exécuter les étapes d'un procédé selon l'une quelconque des revendications 1 à 15.

21. Dispositif de commande selon la revendication 20, **caractérisé en ce que** au moins l'un des un ou plusieurs éléments logiciels est adapté pour contrôler une valeur de référence de temps pour n'importe lequel des robots (33a-n).

22. Dispositif de commande selon la revendication 19, **caractérisé en ce que** au moins l'un des un ou plusieurs éléments logiciels est stocké au moins en partie dans l'élément de stockage en mémoire d'un dispositif de commande.

23. Dispositif de commande selon la revendication 22, **caractérisé en ce que** au moins l'un des un ou plusieurs éléments logiciels (85a, 86, 87) est stocké, au moins en partie, dans un moyen de stockage en mémoire d'un contrôleur de cellule (31) ou autre système de commande de robot.

24. Dispositif de commande selon l'une quelconque des revendications 16 à 23, **caractérisé en ce qu'**il comprend une interface E/S permettant la communication sans fil avec au moins un capteur et/ou élément d'au moins l'un desdits robots.

25. Système de commande comprenant un dispositif de commande selon la revendication 16.

26. Système de commande selon la revendication 25, **caractérisé en ce que** le système est pourvu d'éléments de capteur (92) pour mesurer une position (41) desdites une ou plusieurs pièces et/ou éléments de transport pour lesdites pièces et/ou une horloge de capteur de temps (93) pour mesurer le temps écoulé par rapport auxdites une ou plusieurs pièces et/ou éléments de transport pour lesdites pièces.

27. Système de commande selon la revendication 26, **caractérisé en ce que** les éléments de capteur sont adaptés pour fournir une mesure de la position d'une pièce sur laquelle au moins l'un des robots doit travailler au début d'une tâche dans un cycle de fonctionnement ou programme de mouvements de robot (21).

28. Système de commande selon la revendication 27, **caractérisé par** une interface d'utilisateur graphique adaptée pour afficher et exécuter des actions relativement à au moins un contrôleur de robot (81) ou contrôleur de cellule (31) commandant ladite pluralité de robots au moyen d'un programme de mouvement (21, 85, 85a) comportant des tâches comprenant un ou plusieurs mouvements.

29. Système de commande selon la revendication 25, **caractérisé en ce qu'**un élément de commande dudit au moins un contrôleur de robot est adapté pour contrôler une valeur de référence de temps pour au moins l'un desdits robots.
